# EUROPEAN PATENT APPLICATION

(11) **EP 4 102 275 A1**
(43) Date of publication of application: **14.12.2022**
(21) Application number: 21750262.4
(22) Date of filing: 19.01.2021
(51) Int. Cl.: G02B 6/44

(54) **OPTICAL FIBER CABLE AND MANUFACTURING METHOD FOR OPTICAL FIBER CABLE**

(30) Priority: 07.02.2020 JP 2020019604
(71) Applicant: Fujikura Ltd., Tokyo 135-8512 (JP)
(72) Inventor: MUKAI Okimi, Sakura-shi, Chiba 285-8550 (JP); OHNO Masatoshi, Sakura-shi, Chiba 285-8550 (JP); OSATO Ken, Sakura-shi, Chiba 285-8550 (JP)
(74) Representative: Plasseraud IP
(86) International application number: PCT/JP2021/001627
(87) International publication number: WO 2021/157334

(57) **Abstract**

An optical fiber cable (1) includes a core (10) including a plurality of optical fibers, an interposed layer (20) formed by winding fibers around the core (10) in an SZ shape, a reinforcing layer (31) made of metal and covering the interposed layer (20), and a sheath (40) covering the reinforcing layer (31).

## Description

### Field of the Invention

The present invention relates to an optical fiber cable and a method for manufacturing an optical fiber cable.

Priority is claimed on Japanese Patent Application No. 2020-019604, filed February 7, 2020, the content of which is incorporated herein by reference.

### Description of Related Art

An optical fiber cable generally includes a core including a plurality of optical fibers and a sheath housing the core. Depending on an installation environment of the optical fiber cable, the sheath may be bitten by a mouse or squirrel and the optical fiber inside the sheath may be damaged. Therefore, in order to protect the optical fiber, a reinforcing layer made of metal may be provided between the core and the sheath.

For example, Patent Document 1 describes an optical fiber cable including an optical fiber, an interposed layer (filling), a reinforcing layer (corrugated tube structure) made of metal, a reinforcing layer made of aramid or the like, and a sheath. In Patent Document 1, the interposed layer is provided to protect the optical fiber from ingress of moisture, but there is no specific disclosure as to how the interposed layer is arranged.

### [Citation List]

### [Patent Document]

[Patent Document 1]
Japanese Patent No. 4105792

### SUMMARY OF THE INVENTION

### [Technical Problem]

In an optical fiber cable including a reinforcing layer made of metal, it is required to improve workability when accessing to an internal optical fiber in addition to ease of manufacturing thereof.

The present invention is made in consideration of such circumstances, and an object of the present invention is to provide an optical fiber cable having improved ease of manufacture and workability when accessing to an optical fiber.

### [Solution to Problem]

In order to solve the above problems, according to a first aspect of the present invention, there is provided an optical fiber cable including: a core including a plurality of optical fibers; an interposed layer formed by winding fibers around the core in an SZ shape; a reinforcing layer made of metal and covering the interposed layer; and a sheath covering the reinforcing layer.

Further, according to a second aspect of the present invention, there is provided a method for manufacturing an optical fiber cable, including: a step of preparing a core including a plurality of optical fibers; a step of forming an interposed layer by SZ twisting fibers around the core while heating the fibers fixed together by the resin; a step of covering the interposed layer with a reinforcing layer made of metal; and a step of covering the reinforcing layer with a sheath.

### [Advantageous Effects of Invention]

According to the aspects of the present invention, it is possible to provide an optical fiber cable having improved ease of manufacture and workability when accessing to an optical fiber.

### BRIEF DESCRIPTION OF THE DRAWINGS

Fig. 1 is a cross-sectional view of an optical fiber cable according to the present embodiment.
Fig. 2 is a diagram showing a configuration example of an optical fiber cable manufacturing apparatus according to the present embodiment.

### DETAILED DESCRIPTION OF THE INVENTION

Hereinafter, an optical fiber cable of the present embodiment and a method for manufacturing an optical fiber cable will be described with reference to the drawings.

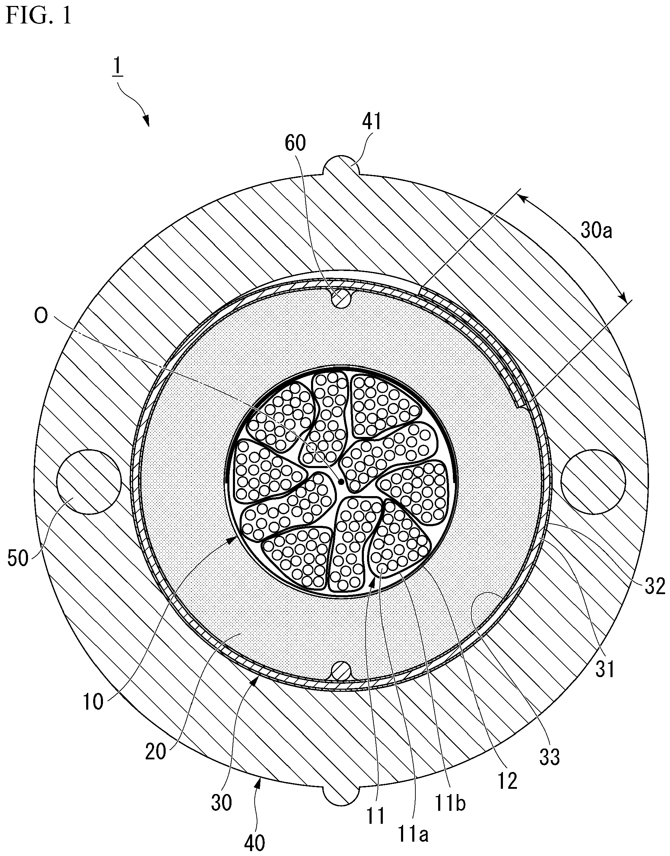

As shown in Fig. 1, an optical fiber cable 1 includes a core 10, an interposed layer 20, a reinforcing unit 30, a sheath 40, two tensile strength members 50, and two ripcords 60.

### (Direction Definition)

In the present embodiment, a central axis of the core 10 is referred to as a central axis O. Further, a longitudinal direction (longitudinal direction of the core 10) of the optical fiber cable 1 is simply referred to as a longitudinal direction. A cross section orthogonal to the longitudinal direction is referred to as a cross section. In a cross-sectional view (Fig. 1), a direction that intersects the central axis O is referred to as a radial direction, and a direction that orbits around the central axis O is referred to as the circumferential direction.

The core 10 includes a plurality of optical fiber units 11 and a wrapping tube 12 that encloses these optical fiber units 11. Each of the optical fiber units 11 includes a plurality of optical fibers 11a and a bundling material 11b for bundling these optical fibers 11a. The wrapping tube 12 may have water absorption property.

The optical fiber unit 11 of the present embodiment is a so-called intermittently-fixed optical fiber ribbon, and the optical fibers adhere to each other so as to spread in a mesh shape (spider web shape) when the plurality of optical fibers 11a are pulled in a direction orthogonal to the longitudinal direction. Specifically, one optical fiber 11a is adhered to adjacent optical fibers 11a at different positions in the longitudinal direction, and the adjacent optical fibers 11a are adhered to each other at a certain interval in the longitudinal direction. The type of the optical fiber unit 11 is not limited to the intermittently-fixed optical fiber ribbon, and may be appropriately changed. For example, the optical fiber unit 11 may be a bundle of the plurality of optical fibers 11a simply with the bundling material 11b, or may be a bundle of the plurality of optical fiber ribbons.

The interposed layer 20 is arranged around the core 10 and is in contact with the core 10 (wrapping tube 12). The interposed layer 20 is formed by winding a plurality of yarns containing fibers around the core 10 in an SZ shape. Each yarn is formed into a single string or a single sheet, for example, by twisting or weaving fibers together. The interposed layer 20 may be formed by arranging a plurality of string-shaped yarns or a plurality of sheet-shaped yarns in a tubular shape that encloses the core 10.

As the fibers constituting the interposed layer 20, glass fibers that do not easily shrink at low temperatures are suitable. However, the specific material of the fibers constituting the interposed layer 20 may be appropriately changed.

Further, the fibers (yarns) may be solidified by a matrix. As the matrix, a thermosetting resin, a photocurable resin, a thermoplastic resin, rubber, an elastomer, or the like can be adopted. By hardening the fibers with a matrix, it is possible to improve the strength of the interposed layer 20, suppress the movement and imbalance of the fibers, and make it difficult for the SZ state to collapse.

Further, for example, by winding the yarn around the core 10 in the SZ shape, softening the matrix by heating or the like, and then curing the matrix again, it is possible to suppress the formation of gaps between the yarns. Even when the fibers are fixed together by the matrix, the interposed layer 20 can be torn along the direction in which the fibers are oriented, and thus, it is easy to access to the core 10. The yarn forming the interposed layer 20 may be fiber reinforced plastics (FRP).

The reinforcing unit 30 extends in the longitudinal direction and is formed in a tubular shape that encloses the interposed layer 20. The reinforcing unit 30 surrounds the interposed layer 20 over the entire circumference and is partially overlapped in the circumferential direction. In the present specification, the overlapped portion of the reinforcing unit 30 is referred to as an overlapping portion 30a. The overlapping portion 30a is arranged at a position different from those of the ripcord 60 and the tensile strength member 50 in the circumferential direction. Further, the reinforcing unit 30 has a corrugated shape. That is, the reinforcing unit 30 includes a plurality of convex portions that are curved outward in the radial direction and a plurality of concave portions that are curved inward in the radial direction, and the convex portions and the concave portions are alternately formed along the longitudinal direction.

The reinforcing unit 30 includes a reinforcing layer 31 made of metal, a first adhesive film 32, and a second adhesive film 33. As the material of the reinforcing layer 31, a metal such as iron, stainless steel, copper, or a copper alloy can be used. The material of the reinforcing layer 31 can be appropriately changed. It is desirable that the reinforcing layer 31 has a sheet shape, for example, and is provided so that a length direction of the reinforcing layer is provided to be aligned with the longitudinal direction of the core 10.

The first adhesive film 32 is attached to a surface of the reinforcing layer 31 facing the sheath 40. The second adhesive film 33 is attached to a surface of the reinforcing layer 31 facing the interposed layer 20. As an adhesive used for the first adhesive film 32 and the second adhesive film 33, for example, a heat-curable type adhesive or a hot melt type adhesive can be used. When flame-retardant properties and low smoke-producing properties are required, a flame-retardant material or a low-smoke-producing material may be added to the adhesive as an additive. The material of the adhesive may be changed as appropriate.

The first adhesive film 32 has a role of fixing the sheath 40 to the reinforcing layer 31. The second adhesive film 33 has a role of fixing the ripcord 60 and the interposed layer 20 to the reinforcing layer 31. Among the first adhesive film 32 and the second adhesive film 33, a portion located between the reinforcing layers 31 in the overlapping portion 30a has a role of fixing the reinforcing layers 31 to each other in the overlapping portion 30a.

The two tensile strength members 50 are embedded in the sheath 40 so as to sandwich the core 10 in the radial direction. The number of tensile strength members 50 can be appropriately changed, and may be one or three or more. As the material of the tensile strength member 50, for example, a metal wire (steel wire or the like), a tensile strength fiber (aramid fiber or the like), FRP (Fiber Reinforced Plastics) or the like can be used.

The two ripcords 60 are located inside the reinforcing layer 31 (reinforcing unit 30) and outside the core 10 in the radial direction. The two ripcords 60 are arranged so as to sandwich the core 10 in the radial direction. The number of ripcords 60 can be appropriately changed, and may be one or three or more. Moreover, the ripcord 60 may be omitted. As the material of the ripcord 60, a string made of synthetic fibers such as polyester and aramid, as well as a columnar rod made of PP or nylon can be used.

In the present embodiment, the ripcord 60 is buried in the interposed layer 20 from the outside in the radial direction and is in contact with an inner surface (second adhesive film 33) of the reinforcing unit 30. When the ripcord 60 is in contact with the second adhesive film 33, the ripcord 60 is fixed to the reinforcing unit 30 and the sheath 40, and the position of the ripcord 60 can be stabilized.

The sheath 40 is formed in a tubular shape extending in the longitudinal direction and encloses the reinforcing unit 30. As the material of the sheath 40, a resin such as polyethylene (PE) or polyvinyl chloride (PVC) can be used. Two marking portions 41 are formed on the sheath 40. Each of the marking portions 41 is a protrusion protruding radially outward from an outer peripheral surface of the sheath 40. The position of the marking portion 41 in the circumferential direction coincides with the ripcord 60, and the marking portion 41 indicates the position of the ripcord 60. The marking portion 41 does not have to be a protrusion, and may be, for example, a colored portion or a recessed portion. Further, the marking portion 41 may not be present. The number of marking portions 41 can be appropriately changed according to the number of ripcords 60.

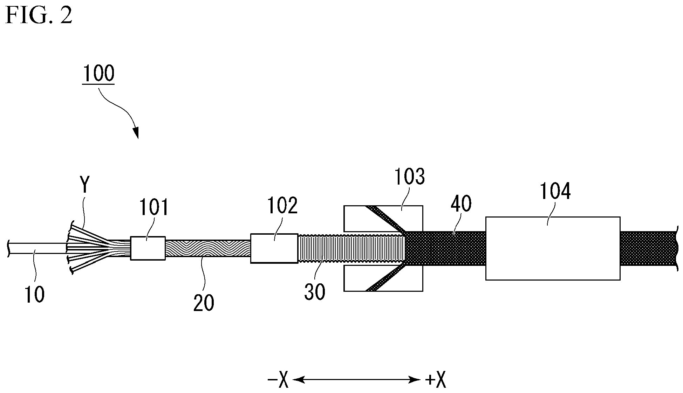

Next, an example of a method for manufacturing the optical fiber cable 1 configured as described above will be described with reference to Fig. 2. In Fig. 2, an X-axis direction is a flow direction of a manufacturing line, a +X side is a downstream side, and a -X side is an upstream side. The X-axis direction coincides with the longitudinal direction of the optical fiber cable 1.

The manufacturing apparatus 100 includes an interposed layer forming portion 101, a reinforcing layer forming portion 102, a sheath forming portion 103, and a cooling portion 104. An interposed layer forming portion 101, a reinforcing layer forming portion 102, a sheath forming portion 103, and a cooling portion 104 are arranged in this order from the upstream side to the downstream side.

The core 10 and a plurality of yarns Y serving as the interposed layer 20 are supplied to the interposed layer forming portion 101. The core 10 is formed in advance by winding a plurality of optical fiber units 11 with a wrapping tube 12 on the upstream side of the interposed layer forming portion 101. The yarn Y is a string formed by twisting fibers serving as the interposed layer 20. In the interposed layer forming portion 101, the interposed layer 20 is formed by winding the plurality of yarns Y in the SZ shape around the core 10. The yarn Y may be fixed together by a resin in advance. In a case where the yarn Y is fixed together by the resin, the yarn Y may be heated in the interposed layer forming portion 101 to soften or melt the resin. By heating the resin, the rigidity of the yarn Y is lowered to facilitate twisting in the SZ shape, and it is possible to suppress the formation of a gap between the yarns Y.
the core 10 wrapped by the interposed layer 20 and a metal sheet (not shown) serving as the reinforcing layer 31 are supplied to the reinforcing layer forming portion 102. The first adhesive film 32 and the second adhesive film 33 may be attached to the metal sheet in advance. The reinforcing layer forming portion 102 corrugates the metal sheet and deforms the metal sheet into a cylindrical shape, winds the metal sheet around the interposed layer 20, and heats the overlapping portion 30a. By heating, the first adhesive film 32 and the second adhesive film 33 bond and fix end portions of the metal sheet (reinforcing layer 31) to each other in the overlapping portion 30a. Since it is not essential to fix the end portions of the reinforcing layer 31 to each other in the overlapping portion 30a, heating in the reinforcing layer forming portion 102 may be omitted.

When the optical fiber cable 1 includes the ripcord 60, the ripcord 60 is longitudinally attached to the interposed layer 20 between the interposed layer forming portion 101 and the reinforcing layer forming portion 102. Therefore, in this case, the core 10 is supplied to the reinforcing layer forming portion 102 in a state of being wrapped by the interposed layer 20 and including the ripcord 60 longitudinally attached to the outside of the interposed layer 20.

The sheath forming portion 103 extrudes and forms the sheath 40 around the reinforcing unit 30 (reinforcing layer 31). At that time, the marking portion 41 is also formed on the outer peripheral surface of the sheath 40, and the tensile strength member 50 (not shown) is embedded in the sheath 40.

The optical fiber cable 1 is manufactured by cooling and curing the sheath 40 in the cooling portion 104.

When a worker accesses to the optical fiber 11a in the optical fiber cable 1, a tool such as a blade is applied to the marking portion 41 to partially incise the sheath 40 and the reinforcing unit 30, and thus, a part of the ripcord 60 is pulled out to the outside of the sheath 40. Then, by pulling the ripcord 60 radially outward along the longitudinal direction, the reinforcing unit 30 and the sheath 40 are torn apart. Thereby, the interposed layer 20 can be exposed.

Since the fibers (yarn Y) constituting the interposed layer 20 are wound around the core 10 in the SZ shape, the fibers can be peeled off from the core 10 by, for example, pinching the reversed portion of the SZ shape with fingers. As described above, in the present embodiment, it is not necessary to incise the interposed layer 20 with a tool or arrange the ripcord for tearing the interposed layer 20 inside the interposed layer 20.

After the fibers (interposed layer 20) are peeled off from the core 10, the optical fiber unit 11 can be easily exposed by breaking the wrapping tube 12 or the like.

Further, in a case where the yarn Y is not wound in the SZ shape and extends linearly, a line length difference occurs between the yarn Y located inside the bend and the yarn Y located outside the bend when the optical fiber cable 1 is bent. When the line length difference occurs, the yarn Y may be imbalanced and the core 10 may be exposed. Furthermore, when the yarn Y is imbalanced, the yarn Y is pressed against the core 10, which may deteriorate the optical characteristics of the optical fiber. Meanwhile, since the yarn Y is wound in the SZ shape, even when the optical fiber cable 1 is bent, the line length difference between the yarns Y is unlikely to occur, and it is possible to suppress the exposure of the core 10 and maintain favorable optical characteristics.

As described above, the optical fiber cable 1 of the present embodiment includes the core 10 including the plurality of optical fibers 11a, the interposed layer 20 formed by winding the fibers around the core 10 in the SZ shape, the reinforcing layer 31 made of metal and covering the interposed layer 20, and the sheath 40 covering the reinforcing layer 31. According to this configuration, even when the sheath 40 is bitten by a mouse or the like and torn, the optical fiber 11a can be protected by the metal reinforcing layer 31. Further, the interposed layer 20 can prevent the optical fiber 11a from being damaged by the burrs and the like of the metal reinforcing layer 31 when coming into contact with the optical fiber 11a.

Moreover, when the fibers (yarn Y) serving as the interposed layer 20 are spirally wound around the core 10, it is necessary to rotate the supply unit for supplying the fibers to the interposed layer forming portion 101 around central axis O with respect to the core 10. Rotating the supply unit in this way complicates the structure of the manufacturing apparatus 100. Meanwhile, in the present embodiment, the interposed layer 20 is formed by winding the fibers around the core 10 in the SZ shape. Therefore, it is not necessary to rotate the supply unit for supplying the fiber to the interposed layer forming portion 101 with respect to the core 10, and the structure of the manufacturing apparatus 100 can be simplified. Accordingly, the ease of manufacturing the optical fiber cable 1 can be improved.

Further, if the fibers are spirally wound around the core 10, it becomes necessary to partially cut the fibers when accessing to the optical fiber 11a in the optical fiber cable 1. At that time, the fibers may be erroneously cut. Meanwhile, in the present embodiment, since the fibers are wound in the SZ shape around the core 10, by removing the sheath 40 and the reinforcing unit 30 in a section longer than a pitch (SZ twist cycle) in which the fibers are twisted in the SZ shape in the longitudinal direction, the fibers can be easily unwound, and the core 10 can be exposed. Further, when the fibers wound in the SZ shape around the core 10 are unwound, the yarn Y can be easily slackened with respect to the core 10, and thus, there is also less risk of erroneously cut fibers when the fibers are cut. Therefore, the workability when accessing to the optical fiber 11a can be improved.

Further, when the fibers constituting the interposed layer 20 are fixed together by a resin, the strength of the interposed layer 20 can be further increased. Therefore, the optical fiber 11a can be protected more reliably.

Further, when the fibers constituting the interposed layer 20 are glass fibers, shrinkage of the interposed layer 20 in a low temperature environment can be reduced. Therefore, stress generated in the optical fiber 11a due to the shrinkage of the interposed layer 20 can be reduced.

Further, the method for manufacturing an optical fiber cable includes a step of preparing the core 10 including the plurality of optical fibers 11a, a step of forming the interposed layer 20 by SZ twisting fibers around the core 10 while heating the fibers (yarn Y) fixed together by the resin, a step of covering the interposed layer 20 with the reinforcing layer 31 made of metal, and a step of covering the reinforcing layer 31 with the sheath. In this way, when the interposed layer 20 is formed, the fibers fixed together by the resin are heated. Accordingly, the rigidity of the yarn Y is lowered, the yarn Y is easily twisted in the SZ shape, and formation of a gap between the yarns Y is suppressed.

A technical scope of the present invention is not limited to the above-described embodiment, and various modifications can be made without departing from a spirit of the present invention.

For example, in the above embodiment, the optical fiber cable 1 having a so-called WTC (Wrapping Tube Cable) (registered trademark) structure is described, but the type of the optical fiber cable 1 can be appropriately changed. Specifically, the optical fiber cable 1 may be a slot cable or a loose tube cable.

Further, in the above-described embodiment, the reinforcing unit 30 includes the overlapping portion 30a, but the overlapping portion 30a may not be provided. For example, by abutting the end portions of the reinforcing unit 30 in the circumferential direction and fixing the abutting surface by welding, adhesion, or the like, the reinforcing unit 30 can be made into a tubular shape even when there is no overlapping portion 30a.

Further, in the above-described embodiment, the optical fiber cable 1 includes the reinforcing unit 30, but the reinforcing unit 30 may not be arranged. Even in this case, the above-mentioned effects such as protection of the core 10, favorable optical characteristics, core accessing workability, and ease of manufacture obtained by twisting the interposed layer 20 in SZ can be obtained.

In addition, it is possible to replace the components in the above-described embodiment with well-known components as appropriate without departing from the spirit of the present invention, and the above-described embodiments and modifications may be appropriately combined.

### [Reference Signs List]

1: Optical fiber cable
10: Core
11a: Optical fiber
20: Interposed layer
31: Reinforcing layer
40: Sheath

## Claims

1. An optical fiber cable comprising:
a core including a plurality of optical fibers;
an interposed layer formed by winding fibers around the core in an SZ shape;
a reinforcing layer made of metal and covering the interposed layer; and
a sheath covering the reinforcing layer.

2. The optical fiber cable according to Claim 1,
wherein the fibers are fixed together by a resin.

3. The optical fiber cable according to Claim 1 or 2,
wherein the fibers are glass fibers.

4. A method for manufacturing an optical fiber cable, comprising:
a step of preparing a core including a plurality of optical fibers;
a step of forming an interposed layer by SZ twisting fibers around the core while heating the fibers fixed together by a resin;
a step of covering the interposed layer with a reinforcing layer made of metal; and
a step of covering the reinforcing layer with a sheath.
